# EUROPÄISCHE PATENTSCHRIFT

(11) **EP 1 297 988 B1**
(45) Veröffentlichungstag und Bekanntmachung des Hinweises auf die Patenterteilung: **14.12.2005**
(21) Anmeldenummer: 02090390.2
(22) Anmeldetag: 24.08.2000
(51) Int. Cl.: B60K 35/00, G01C 21/26

(54) **Verfahren und Vorrichtung zur aktiven Hilfestellung eines Kraftfahrzeugführers in einem Kraftfahrzeug**
Method and device for actively assisting a vehicle driver in a motor vehicle
Procédé et dispositif de position d'assistance active d'un conducteur dans une automobile

(30) Priorität: 03.09.1999 DE 19941973
(43) Veröffentlichungstag der Anmeldung: 02.04.2003
(62) Teilanmeldung aus: 00962371.1
(73) Patentinhaber: Volkswagen AG, 38436 Wolfsburg (DE)
(72) Erfinder: Heise, Gilbert, 38442 Wolfsburg (DE); Dirksen, Susanne, 38440 Wolfsburg (DE); Busse, Gerald, 31141 Hildesheim (DE); Lilienthal, Jörg, 38518 Gifhorn (DE)
(74) Vertreter: Effert, Bressel und Kollegen

(56) Entgegenhaltungen:
- EP-A- 0 756 153
- WO-A-99/28145
- US-A- 5 239 700
- US-A- 5 469 150

## Beschreibung

Die Erfindung betrifft ein Verfahren und eine Vorrichtung zur Durchführung des Verfahrens zur aktiven Hilfestellung eines Kraftfahrzeugführers in einem Kraftfahrzeug.

Kraftfahrzeuge stellen ein immer komplexer werdendes Gesamtsystem dar, das einem Kraftfahrzeugführer einerseits immer mehr Komfortmöglichkeiten bietet und andererseits über immer mehr sicherheitsrelevante Systeme verfügt. Auch fällt es den meisten Kraftfahrzeugführern schwer, sich die richtige Bedienung für alle Komfortsysteme wie beispielsweise Navigation, Zusatzheizungen, Klimaanlage, Sitzverstellungen, Spiegelverstellungen, Telefon, Audio etc. zu merken. Dies führt dazu, daß eine Vielzahl von ansonsten benutzten Komfortmöglichkeiten erst gar nicht benutzt wird. Des weiteren werden dem Kraftfahrzeugführer über die vorhandenen Anzeigen lediglich die Ist-Zustände, wie beispielsweise "der Tank ist leer", "Inspektionsintervall abgelaufen" oder "Aus Sicherheitsgründen Fernsehen nur im Stand" angezeigt.

Aus der WO 99/28145 ist ein Verfahren zur aktiven Hilfestellung eines Kraftfahrzeugführers in einem Kraftfahrzeug bekannt, mittels mindestens eines Steuergerätes und einer Eingabe- und Anzeigeeinheit, wobei das Steuergerät auf die Daten von fahrzeugzustandsrelevanten Sensoren und Steuergeräten zugreifen kann. Dabei erfolgt eine Erfassung eines kritischen Fahrzeugzustandes durch das Steuergerät durch Auswertung der Daten der fahrzeugrelevanten Sensoren und Steuergeräte. Der erfasste fahrzeugkritische Zustand wird dann auf der Anzeigeeinheit dargestellt. Automatisch oder nach einer Interaktion durch den Kraftfahrzeugführer wird zusätzlich eine Handlungsempfehlung auf der Anzeigeeinheit dargestellt. Beispielsweise wird ein niedriger Kühlwasserstand erfasst und angezeigt. Zusätzlich erhält dann der Kraftfahrzeugführer die Handlungsempfehlung, den Kühlwasserstand zu kontrollieren.

Aus der EP 0 756 153 A2 (Oberbegriff der Ansprüche 1 bzw. 2) ist eine Navigationseinrichtung für ein Kraftfahrzeug bekannt. Das Navigationssystem umfasst eine Eingabemaske, in welche der Nutzer Ziele aus vordefinierten Gruppen auswählen kann. Beispiele für diese vordefinierten Gruppen auswählen kann. Beispiele für diese vordefinierten Gruppen sind Tankstelle, Restaurant, Imbiss-Läden, Parkplätze etc. Die Navigationseinrichtung ermittelt dann Fahrtroutenhinweise zu diesem ausgewählten Ort, wo eine aktuelle Zielführung zu einem Zielpunkt berücksichtigt wird.

Aus der US 5,239,700 ist eine Multifunktionsbedieneinrichtung für ein Kraftfahrzeug bekannt, die neben den bekannten Fahrzeugzustandsanzeigen auch zur Bedienung einer Vielzahl von Komfortkomponenten wie beispielsweise CD-Player, Navigationseinrichtungen, Auto-Radio oder Mobil-Telefone bedient werden können.

Aus der US 5,469,150 ist ein vernetztes CAN-Bussystem mit einer Vielzahl von Aktuatoren und Steuergeräten bekannt.

Aus der Bedienungsanleitung "Berlin RCM 3031" ist ein Auto-Radio bekannt, bei dem der Nutzer eine Präferenztabelle von gewünschten Sendern einprogrammieren kann. Dabei kann der Nutzer zwischen einer Empfangs- und der Präferenztabelle wechseln, wobei in der Präferenztabelle nicht empfangbare Sender gekennzeichnet werden. Aus den Tabellen kann dann ein Sender ausgewählt werden, der dann automatisch beim Auto-Radio eingestellt wird.

Aus der EP 366 132 B1 ist ein Dreh-Druckgeber zur Bedienung einer Navigationseinrichtung bekannt.

Der Erfindung liegt daher das technische Proble verbessof zugrunde, ein Verfahren und eine Vorrichtung zur aktiven Hilfestellung eines Kraftfahrzeugführers in einem Kraftfahrzeug zu schaffen, mittels derer ein Kraftfahrzeugführer verbessof aktiv bei Auswahl von Empfehlungen unterstützt wird.

Die Lösung des technischen Problems ergibt sich durch die Gegenstände mit den Merkmalen der Patentansprüche 1 und 2. Weitere vorteilhafte Ausgestaltungen der Erfindung ergeben sich aus den Unteransprüchen.

Hierzu wird mittels des Steuergerätes und einer Ein- und Anzeigeeinheit eine automatische Unterstützung bei der Kommunikation zwischen dem Kraftfahrzeugführer und dem Fahrzeug gegeben. Dabei werden dem Kraftfahrzeugführer zur Hilfestellung kontex- und präferenzsensitive Eingabeoptionen angeboten, die nach Auswahl durch den Kraftfahrzeugführer selbsttätig durchgeführt werden.

Eine weitere aktive Hilfestellung kann dem Kraftfahrzeugführer durch Empfehlungen wie beispielsweise Essen, Rasten, Tanken, Parken oder Übernachten erhalten. Hierzu aktiviert der Kraftfahrzeugführer manuell das Verfahren und wählt aus einer Vorschlagsliste aus, wozu er Empfehlungen erhalten möchte. Durch Zugriff auf die Daten eines Navigationssystems wird eine Liste möglicher Vorschläge zusammengestellt, wobei gegebenenfalls Fahrerpräferenzen berücksichtigt werden. In den einzelnen Empfehlungen kann sich der Kraftfahrzeugführer Details anzeigen lassen sowie nach Auswahl einer Empfehlung dorthin navigieren lassen bzw. eine Bestellung vornehmen lassen, wobei die Nummer automatisch gewählt wird.

Ergänzend sei angemerkt, daß manuelle Aktivierung hier im Gegensatz automatischen Aktivierung zu verstehen ist und somit auch Aktivierung Sprachbefehl umfaßt.

In einer weiteren bevorzugten Ausführungsform ist die Anzeigeeinheit als Touch-Screen ausgebindet.

In einer weiteren bevorzugten Ausführungsform ist die Eingabeeinheit als Spracherkennungseinheit und/oder als bidirektionaler Dreh-Druckgeber ausgebildet.

Die Erfindung wird nachfolgend anhand eines bevorzugten Ausführungsbeispiels näher erläutert. Die Fig. zeigen:
- Fig. 1: eine Darstellung auf einer Anzeigeeinheit nach Aktivierung des Verfahrens,
- Fig. 2: eine Darstellung auf der Anzeigeeinheit nach einem Fahrerwunsch nach Empfehlungen,
- Fig. 3: eine Darstellung einer Trefferliste,
- Fig. 4: eine Detaildarstellung eines Treffers und
- Fig. 5: eine Darstellung der Treffer auf einer digitalen Straßenkarte.

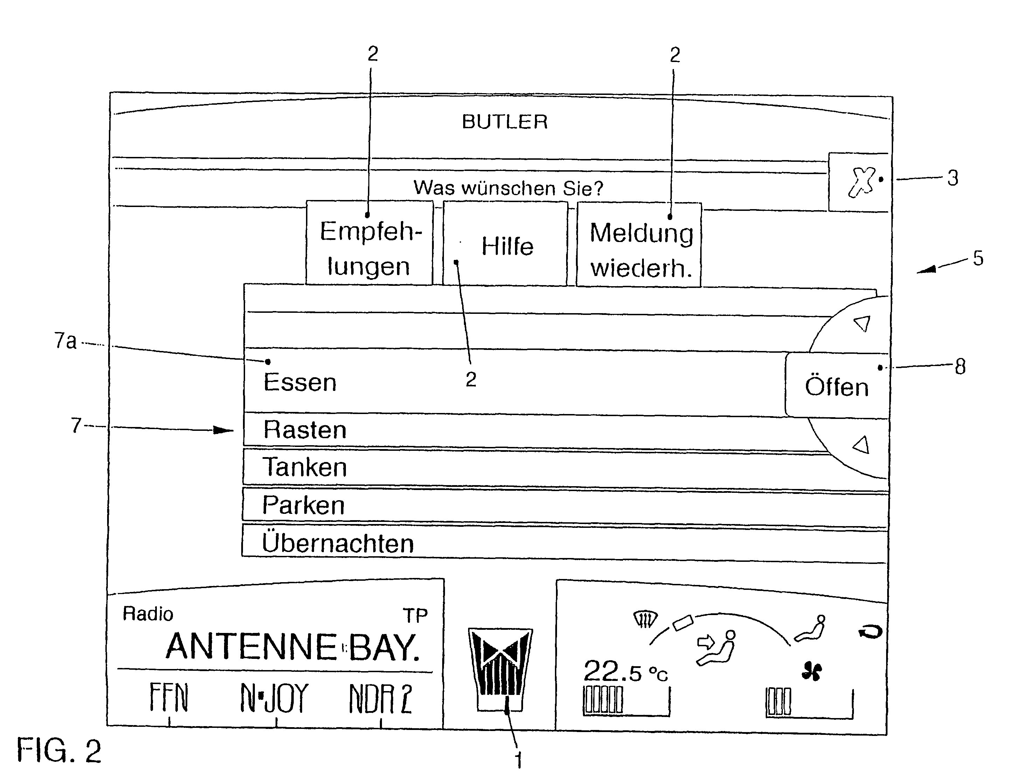

Dem Verfahren zur aktiven Hilfestellung eines Kraftfahrzeugführers in einem Kraftfahrzeug ist ein Aktivierungsfeld 1 zugeordnet, das auf der als Touch-Screen ausgebildeten Anzeigeeinheit 5 an stets der gleichen Stelle angeordnet ist. Wird dieses Aktivierungsfeld 1 betätigt, so verändert ein nicht dargestelltes Steuergerät die aktuelle Darstellung auf der Anzeigeeinheit 5 und erzeugt ein erstes Eingabemenü 6 auf der Anzeigeeinheit 5. Dieses Eingabemenü 6 umfaßt eine Kennzeichnung, daß das Verfahren aktiviert ist, in dem der Name der Funktion wie beispielsweise BUTLER" eingeblendet wird, wobei zusätzlich der obere Rand des Eingabemenüs 6 abgerundet ausgebildet ist. Des weiteren umfaßt das Eingabemenü 6 drei Eingabefelder 2, auf denen alphanumerisch die Wahlmöglichkeiten dargestellt sind. Dabei kann der Nutzer zwischen den Eingabeoptionen "Empfehlungen", "Hilfe" und "Meldung wiederholen" wählen, wobei die Eingabefelder 2 als berührungssensitive Felder ausgebildet sind. Alternativ oder kumulativ kann die Eingabe auch über einen Sprachbefehl und/oder über einen bidirektionalen Dreh-Druckgeber erfolgen, der beispielsweise in der EP 366 132 B1 offenbart ist. Wird nun die Eingabeoption 2a "Empfehlungen" ausgewählt, so erzeugt das Steuergerät eine Darstellung gemäß Fig. 2.

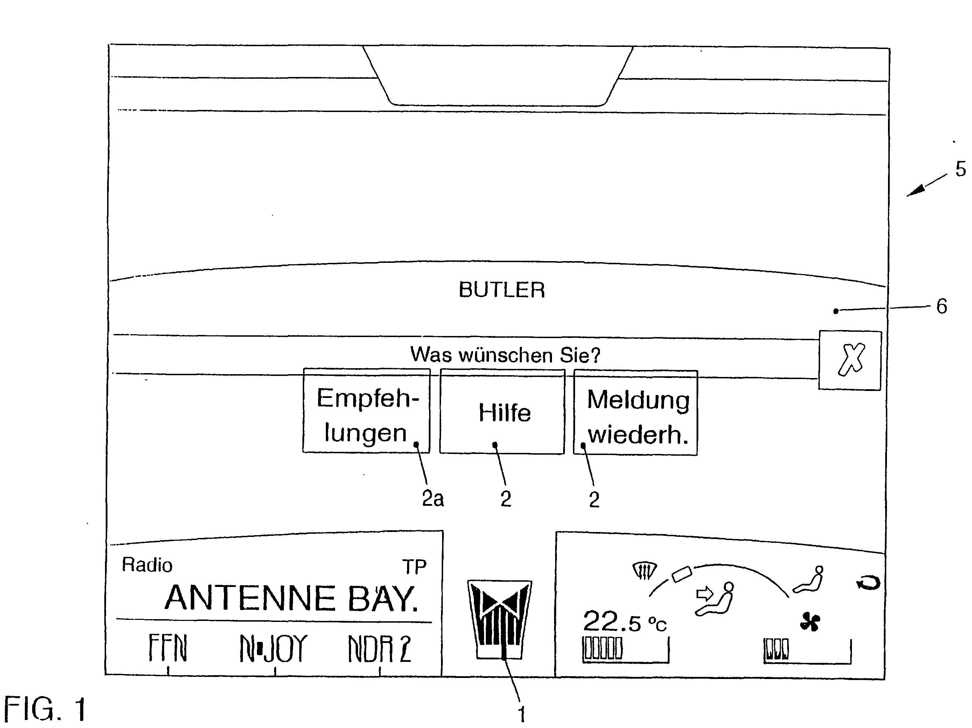

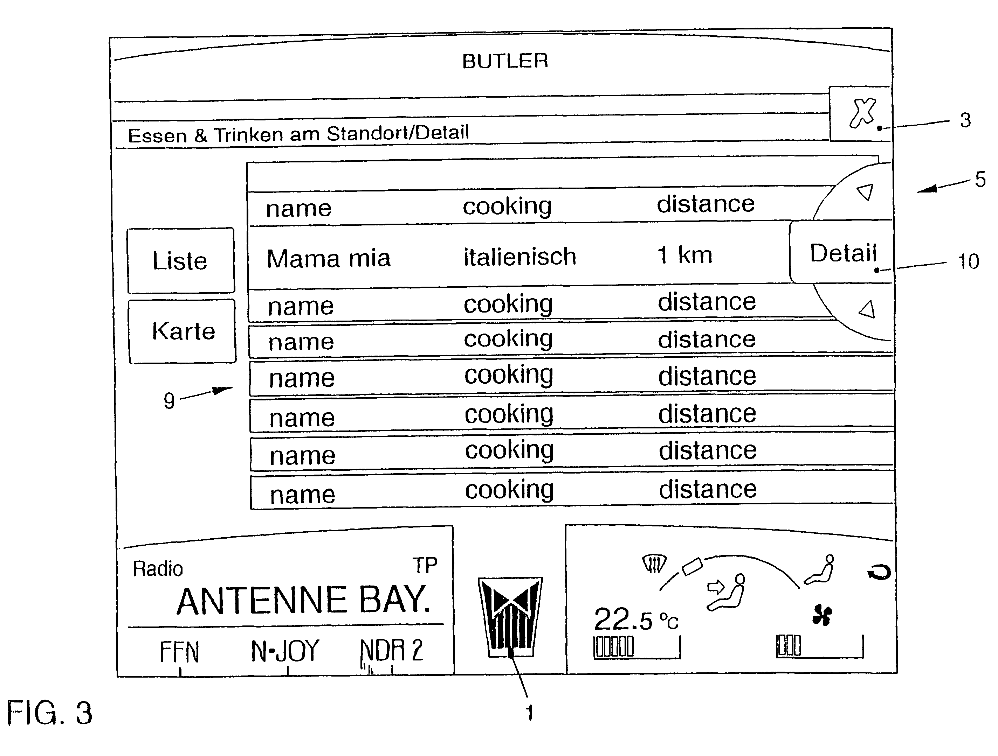

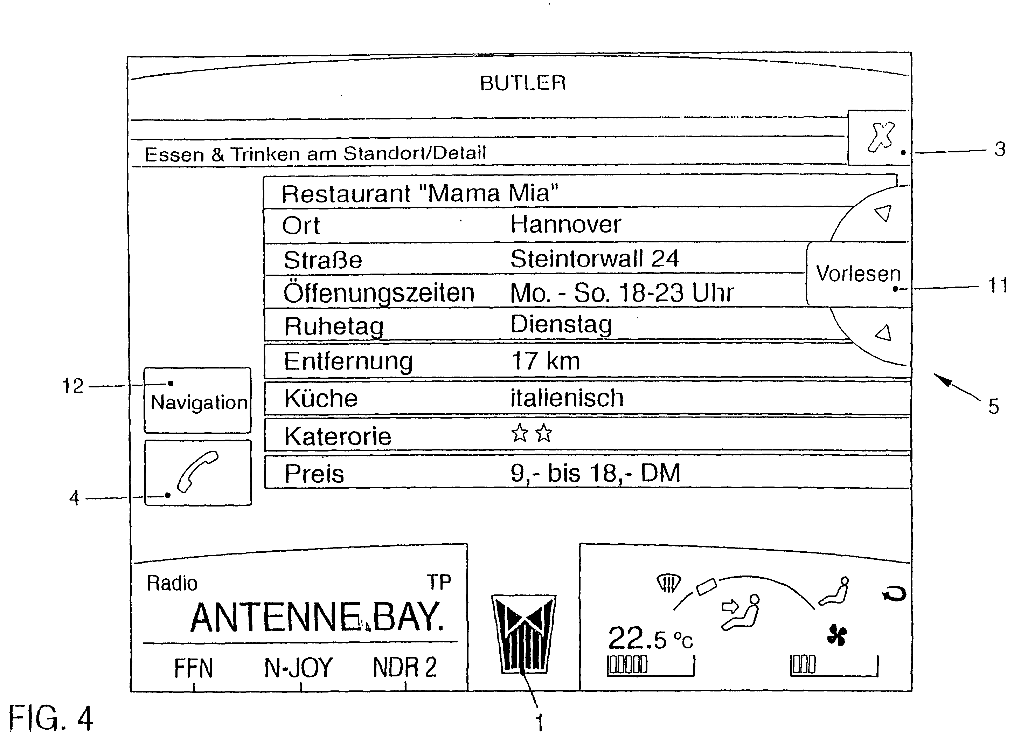

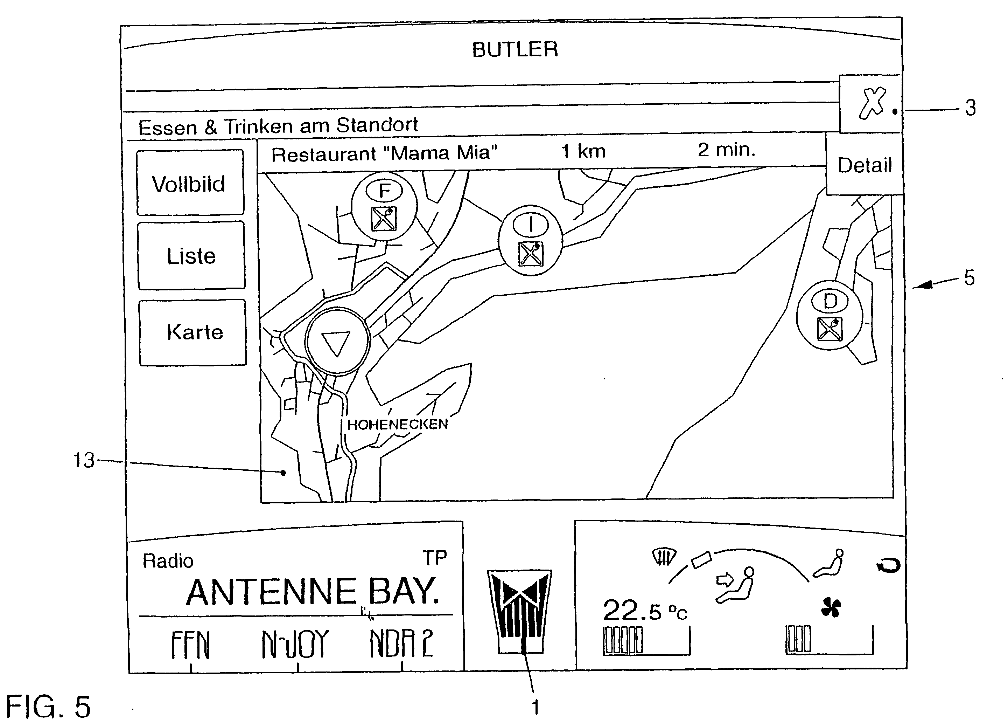

Dabei ist das Eingabemenü 6 gemäß Fig. 1 auf der Anzeigeeinheit 5 nach oben verschoben worden. Unter dem Eingabemenü ist dann eine Auswahlliste 7 der Gebiete angegeben, für die das Verfahren dem Nutzer Empfehlungen geben kann, hier also "Essen", "Rasten", "Tanken", "Parken" und "Übernachten". Die Felder der Auswahlliste 7 sind wie die Eingabefelder 2 als berührungssensitive Felder ausgebildet. Wählt nun der Nutzer das Gebiet "Essen", so wird dieses Feld 7a farblich oder optisch hervorgehoben dargestellt. Des weiteren wird dem ausgewählten Feld ein berührungssensitives Eingabefeld 8 "Öffnen" zugeordnet, mittels dessen nähere Informationen darstellbar sind. Der Nutzer kann jedoch durch Berühren zu einem anderen Gebiet oder einer anderen Eingabeoption wechseln oder aber durch Berührung des "Schließ-Feldes" 3 das Verfahren abbrechen. Nach dem Berühren des Eingabefeldes 8 "Öffnen" erzeugt das Steuergerät eine Vorschlagliste 9, die in Fig. 3 dargestellt ist. Zur Erzeugung dieser Vorschlagliste 9 greift das Steuergerät auf die Datenbasis eines Navigationssystems zurück, um die aktuelle Position des Kraftfahrzeuges zu ermitteln. Ausgehend von dieser aktuellen Position durchsucht das Steuergerät eine interne und/oder externe Datenbank mit Gaststätten. Das Steuergerät wählt dabei die Gaststätten aus, die sich innerhalb eines bestimmten Umkreises um die aktuelle Position befinden, wobei zusätzlich Fahrerpräferenzen wie beispielsweise "keine japanische Küche" berücksichtigt werden. Möchte nun der Nutzer zu einer Gaststätte Details erhalten, wo wird diese Gaststätte in der Vorschlagliste 9 selektiert und das eingeblendete Feld 10 "Detail" aktiviert. Eine beispielhafte Detaildarstellung ist in Fig. 4 dargestellt. Auf Wunsch kann sich der Nutzer die Speisekarte vorlesen lassen, wozu das Eingabefeld 11 "Vorlesen" betätigt wird. Durch Betätigen des Eingabefeldes 4 wird automatisch eine Telefonverbindung zu der Gaststätte hergestellt, beispielsweise um einen Tisch zu bestellen. Möchte hingegen der Nutzer Navigationsdaten zu der Gaststätte erhalten, so wird bei Betätigung des Eingabefeldes 12 "Navigation" eine digitale Straßenkarte 13 mit Routenführung gemäß Fig. 5 auf der Anzeigeeinheit 5 dargestellt und/oder die Zielführung aktiviert.

## Patentansprüche

1. Verfahren zur aktiven Hilfestellung eines Kraftfahrzeugführers in einem Kraftfahrzeug, mittels mindestens eines Steuergerätes und einer Eingabe- und Anzeigeeinheit (5), wobei das Steuergerät auf eine interne und/oder externe Datenbasis zugreifen kann, umfassend folgende Verfahrensschritte:
a) Manuelles Aktivieren des Verfahrens durch den Kraftfahrzeugführer,
b) Darstellen einer Liste (7) der Gebiete von möglichen Empfehlungen auf der Anzeigeeinheit (5),
c) Durchführen eines kontex- und/oder präferenzsensitiven Abfragedialogs zur Ermittlung des Fahrerwunsches zu dem gewählten Gebiet, wobei ausgehend von der aktuellen Position des Kraftfahrzeuges die interne und/oder externe Datenbasis durchsucht wird und in Abhängigkeit eines Umkreises um die aktuelle Position eine Vorschlagsliste (9) von Empfehlungen erzeugt wird,
d) Selektieren einer Empfehlung aus der Vorschlagsliste (9), wobei Detailinformationen zu der selektierten Empfehlung dargestellt werden, **gekennzeichnet durch** den weiteren Verfahrensschritt
e) Darstellen eines Eingabefeldes (4) für eine Telefonverbindung und eines Eingabefeldes (12) für die Navigation, wobei bei Betätigung des Eingabefeldes (4) automatisch eine Telefonverbindung hergestellt wird und bei Betätigung des Eingabefeldes (12) für die Navigation eine digitale Straßenkarte mit Routenführung dargestellt und/oder die Zielführung aktiviert wird.

2. Vorrichtung zur aktiven Hilfestellung eines Kraftfahrzeugführers in einem Kraftfahrzeug, umfassend mindestens ein Steuergerät und eine Eingabe- und Anzeigeeinheit (5), wobei das Steuergerät auf eine interne und/oder externe Datenbasis zugreift, wobei nach manueller Aktivierung eine Liste (7) der Gebiete von möglichen Empfehlungen auf der Anzeigeeinheit (5) dargestellt ist, wobei zu dem ausgewählten Gebiet zur Ermittlung des Fahrerwunsches ein kontex- und/oder präferenzsensitiver Abfragedialog durchführbar ist, wobei ausgehend von einer aktuellen Position des Kraftfahrzeuges die interne und/oder externe Datenbasis durchsucht wird und in Abhängigkeit eines Umkreises um die aktuelle Position eine Vorschlagliste (9) von Empfehlungen erzeugt wird, wobei zu einer selektiven Empfehlung aus der Vorschlagliste (9) Detailinformationen dargestellt sind, **dadurch gekennzeichnet, daß** ein Eingabefeld (4) für eine Telefonverbindung und ein Eingabefeld (12) für die Navigation dargestellt sind, wobei bei Betätigung des Eingabefeldes (4) automatisch eine Telefonverbindung hergestellt wird und bei Betätigung des Eingabefeldes (12) für die Navigation eine digitale Straßenkarte mit Routenführung dargestellt und/oder die Zielführung aktiviert wird.

3. Vorrichtung nach Anspruch 2, **dadurch gekennzeichnet, dass** die Anzeigeeinheit (5) als Touch-Screen ausgebildet ist.

4. Vorrichtung nach einem der Ansprüche 2 oder 3, **dadurch gekennzeichnet, dass** die Eingabeeinheit als Spracherkennungseinheit und/oder als bidirektionaler Dreh-Druckgeber ausgebildet ist.

## Claims

1. Method for actively assisting a motor-vehicle driver in a motor vehicle by means of at least one controller and one input and display unit (5), with the controller being able to access an internal and/or external database, comprising the following method steps of:
a) the motor-vehicle driver manually activating the method,
b) displaying a list (7) of areas of possible recommendations on the display unit (5),
c) carrying out a context- and/or preference-sensitive query dialogue in order to determine the driver's wishes regarding the selected area, with the internal and/or external database being searched on the basis of the current position of the motor vehicle and a list (9) of proposed recommendations being generated as a function of a circle around the current position,
d) selecting a recommendation from the list (9) of proposals, with detailed information about the selected recommendation being displayed, **characterized by** the further method step of:
e) displaying an input field (4) for a telephone connection and an input field (12) for navigation, with a telephone connection being automatically established when the input field (4) is operated, and a digital map including the route being displayed and/or the navigation system being activated when the input field (12) for navigation is operated.

2. Apparatus for actively assisting a motor-vehicle driver in a motor vehicle, comprising at least one controller and one input and display unit (5), with the controller accessing an internal and/or external database, with a list (7) of areas of possible recommendations being displayed on the display unit (5) following manual activation, with it being possible to carry out a context- and/or preference-sensitive query dialogue regarding the selected area in order to determine the driver's wishes, with the internal and/or external database being searched on the basis of a current position of the motor vehicle and a list (9) of proposed recommendations being generated as a function of a circle around the current position, and with detailed information about a selective recommendation from the list (9) of proposals being displayed, **characterized in that** an input field (4) for a telephone connection and an input field (12) for navigation are displayed, with a telephone connection being automatically established when the input field (4) is operated, and a digital map including the route being displayed and/or the navigation system being activated when the input field (12) for navigation is operated.

3. Apparatus according to Claim 2, **characterized in that** the display unit (5) is in the form of a touchscreen.

4. Apparatus according to one of Claims 2 or 3, **characterized in that** the input unit is in the form of a speech-recognition unit and/or a bidirectional rotary/pushbutton transmitter.

## Revendications

1. Procédé d'assistance active d'un conducteur de véhicule automobile dans un véhicule automobile au moyen d'au moins un appareil de commande et une unité de saisie et d'affichage (5), l'appareil de commande pouvant accéder à une base de données interne et/ou externe, comprenant les étapes suivantes :
a) activation manuelle du procédé par le conducteur du véhicule automobile,
b) représentation sur l'unité d'affichage (5) d'une liste (7) des domaines des recommandations possibles,
c) réalisation d'un dialogue d'interrogation contextuel et/ou préférentiel en vue de déterminer le souhait du conducteur à propos du domaine sélectionné, la base de données interne et/ou externe étant parcourue en partant de la position actuelle du véhicule automobile et une liste proposée (9) de recommandations étant générée en fonction d'un cercle autour de la position actuelle,
d) sélection d'une recommandation dans la liste proposée (9), des informations détaillées étant représentées à propos de la recommandation sélectionnée, **caractérisé par** l'étape supplémentaire
e) représentation d'un champ de saisie (4) pour une liaison téléphonique et d'un champ de saisie (12) pour la navigation, une liaison téléphonique étant établie automatiquement en actionnant le champ de saisie (4) et une carte routière numérique avec guidage du trajet étant affichée et/ou le guidage vers la destination étant activé en actionnant le champ de saisie (12) pour la navigation.

2. Dispositif d'assistance active d'un conducteur de véhicule automobile dans un véhicule automobile comprenant au moins un appareil de commande et une unité de saisie et d'affichage (5), l'appareil de commande accédant à une base de données interne et/ou externe, une liste (7) des domaines des recommandations possibles étant représentée sur l'unité d'affichage (5) après l'activation manuelle, un dialogue d'interrogation contextuel et/ou préférentiel pouvant être effectué à propos du domaine sélectionné en vue de déterminer le souhait du conducteur, la base de données interne et/ou externe étant parcourue en partant de la position actuelle du véhicule automobile et une liste proposée (9) de recommandations étant générée en fonction d'un cercle autour de la position actuelle, des informations détaillées étant représentées à propos d'une recommandation sélectionnée dans la liste proposée (9), **caractérisé en ce qu'**un champ de saisie (4) pour une liaison téléphonique et un champ de saisie (12) pour la navigation sont représentés, une liaison téléphonique étant établie automatiquement en actionnant le champ de saisie (4) et une carte routière numérique avec guidage du trajet étant affichée et/ou le guidage vers la destination étant activé en actionnant le champ de saisie (12) pour la navigation.

3. Dispositif selon la revendication 2, **caractérisé en ce que** l'unité d'affichage (5) est réalisée sous la forme d'un écran tactile.

4. Dispositif selon l'une des revendications 2 ou 3, **caractérisé en ce que** l'unité de saisie est réalisée sous la forme d'une unité de reconnaissance vocale et/ou d'un codeur bidirectionnel à rotation/pression.
